# EUROPEAN PATENT SPECIFICATION

(11) **EP 4 116 343 B1**
(45) Date of publication and mention of the grant of the patent: **26.06.2024**
(21) Application number: 21898681.8
(22) Date of filing: 26.11.2021
(51) Int. Cl.: C08F 279/04, C08F 6/18, C08L 55/02, C08F 6/22, C08L 25/12, C08F 265/06

(54) **METHOD FOR PREPARING GRAFT COPOLYMER, GRAFT COPOLYMER, AND RESIN COMPOSITION COMPRISING THE SAME**
VERFAHREN ZUR HERSTELLUNG VON PFROPFCOPOLYMER, PFROPFCOPOLYMER UND HARZZUSAMMENSETZUNG DAMIT
PROCÉDÉ DE PRÉPARATION DE COPOLYMÈRE GREFFÉ, COPOLYMÈRE GREFFÉ ET COMPOSITION DE RÉSINE LE COMPRENANT

(30) Priority: 27.11.2020 KR 20200163202
(43) Date of publication of application: 11.01.2023
(73) Proprietor: LG CHEM, LTD., Yeongdeungpo-gu, Seoul 07336 (KR)
(72) Inventor: HWANG, Moon Ja, Daejeon 34122 (KR); KIM, Chang Hoe, Daejeon 34122 (KR); CHAE, Min Su, Daejeon 34122 (KR); KIM, Geon Soo, Daejeon 34122 (KR); JEON, Hee Jung, Daejeon 34122 (KR); KIM, Hyung Joon, Daejeon 34122 (KR)
(74) Representative: Goddar, Heinz J.
(86) International application number: PCT/KR2021/017654
(87) International publication number: WO 2022/114856

(56) References cited:
- JP-A- 2006 265 406
- JP-A- 2016 125 006
- KR-A- 20170 017 897
- KR-A- 20200 011 701
- KR-A- 20200 064 480

## Description

### TECHNICAL FIELD

### Cross-reference to Related Applications

This application claims the benefit of Korean Patent Application No. 10-2020-0163202, filed on November 27, 2020, in the Korean Intellectual Property Office.

### Technical Field

The present invention relates to a method for preparing a graft copolymer, and more specifically, to a method for preparing a graft copolymer capable of improving the chemical resistance and impact resistance of a resin composition without degrading the mechanical properties thereof, and a graft copolymer prepared therefrom, and a resin composition including the same.

### BACKGROUND ART

An acrylonitrile-butadiene-styrene (ABS) copolymer is prepared by graft-copolymerizing styrene and acrylonitrile with a butadiene rubber polymer. An ABS copolymer is excellent in impact resistance, chemical resistance, thermal stability, colorability, fatigue resistance, rigidity, and processibility compared to typical high-impact polystyrene (HIPS), and thus, is used in automotive interior and exterior materials, office equipment, components for various electrical·electronic appliances, toys, or the like.

Particularly, when an ABS copolymer used in a part which requires painting processing, or a part which is likely to be exposed to a refrigerant oil such as polyvinyl ether (PVE) has insufficient chemical resistance, defects such as erosion or pinholes may be caused during the painting processing, and when in contact with a refrigerant oil such as polyvinyl ether, cracks may be generated. Therefore, as a method for further improving the chemical resistance of an ABS copolymer, a method of increasing the content of acrylonitrile or introducing a large-diameter rubbery polymer of 5,000 Å or greater has been proposed. However, when the content of acrylonitrile is increased during the preparation of an ABS copolymer, the content of styrene is bound to be decreased relatively, and in addition, preparing of a large-diameter rubbery polymer of 5,000 Å or greater results in an increase in the preparation time and preparation cost, so that there are problems in that productivity is degraded, and accordingly, preparation competitiveness is degraded.

Meanwhile, as a method for improving the chemical resistance of an ABS copolymer, a method of adding silicone oil, an alkylene oxide copolymer, or the like in an extrusion compounding process with a matrix resin has also been proposed. However, even in this case, a large amount of silicone oil or an alkylene oxide copolymer is required to be added in order to ensure dispersibility in a resin composition, which eventually results in an increase in the preparation cost, so that there is a problem in that preparation efficiency is degraded.

In addition, as a method for improving the chemical resistance of an ABS copolymer, a method of regulating the swelling index of a rubbery polymer, or regulating the average particle size has been proposed, but in order to regulate the above, the polymerization conversion rate is required to be lowered and the polymerization time is required to be further increased, which eventually results in an increase in the preparation cost, thereby causing the degradation of productivity. Particularly, an ABS copolymer is basically required to secure not only chemical resistance but also impact resistance, and in order to prepare an ABS copolymer having excellent impact resistance, the gel content of a rubbery polymer is required to be reduced. However, since the polymerization conversion rate is eventually required to be lowered in order to reduce the gel content of a rubbery polymer, there is a problem in that the productivity is degraded.

### [Prior Art Document]

### [Patent Document]

(Patent Document 1) KR 10-2018-0052849 A

### DISCLOSURE OF THE INVENTION

### TECHNICAL PROBLEM

An aspect of the present invention provides a method for preparing a graft copolymer capable of improving the chemical resistance of a resin composition including a graft copolymer without increasing the content of acrylonitrile or using a large-diameter rubbery polymer of 5,000 Å or greater as a rubbery polymer when preparing the graft copolymer, or without adding silicone oil or alkylene oxide-based copolymer when preparing the resin composition.

Another aspect of the present invention provides a method for preparing a graft copolymer capable of improving the impact resistance of a resin composition including a graft copolymer while securing productivity since there is no need to reduce the gel content of a rubbery polymer.

Yet another aspect of the present invention provides a resin composition having excellent chemical resistance without the degradation in mechanical physical properties.

### TECHNICAL SOLUTION

According to an aspect of the present invention, there are provided a method for preparing a graft copolymer, a graft copolymer prepared therefrom, and a resin composition including the same.
(1) The present invention provides a method for preparing a graft copolymer, wherein the method includes introducing a polymer coagulant latex including a polymer coagulant to a rubbery polymer latex including a rubbery polymer and coagulating the polymer coagulant latex to prepare an enlarged rubbery polymer latex containing an enlarged rubbery polymer (S10), and introducing an aromatic vinyl-based monomer and a vinyl cyan-based monomerto the enlarged rubbery polymer latex prepared in Step (S10) above and performing graft polymerization to prepare a graft copolymer latex including a graft copolymer (S20), wherein the polymer coagulant includes an acid group-containing copolymer having a weight average molecular weight of 550,000 g/mol to 750,000 g/mol, and the content of the vinyl cyan-based monomer introduced in Step (S20) above is 15 wt% to 24 wt% based on the total content of the aromatic vinyl-based monomer and the vinyl cyan-based monomer.
(2) In (1) above, the present invention provides a method for preparing a graft copolymer, wherein the acid group-containing copolymer includes an acid group-containing monomer unit in an amount of 1 wt% to 10 wt%.
(3) In (1) or (2) above, the present invention provides a method for preparing a graft copolymer, wherein the acid group-containing copolymer has an average particle diameter of 85 nm to 140 nm.
(4) In any one of (1) to (3) above, the present invention provides a method for preparing a graft copolymer, wherein the polymer coagulant latex is introduced in an amount of 0.08 parts by weight to 3 parts by weight (based on solids) based on 100 parts by weight (based on solids) of the rubbery polymer latex in Step (S10) above.
(5) In any one of (1) to (4) above, the present invention provides a method for preparing a graft copolymer, wherein the rubbery polymer is a conjugated diene-based polymer.
(6) In any one of (1) to (5) above, the present invention provides a method for preparing a graft copolymer, wherein the enlarged rubbery polymer latex prepared in Step (S10) above has a gel content of 88 wt% to 96 wt%.
(7) In any one of (1) to (6) above, the present invention provides a method for preparing a graft copolymer, wherein Step (S20) above is performed without introducing an emulsifier.
(8) In any one of (1) to (7) above, the present invention provides a method for preparing a graft copolymer, wherein the graft copolymer particles prepared in Step (S20) above have a particle size distribution (PSD) of 0.45 to 0.6.
(9) The present invention provides a graft copolymer including an enlarged rubbery polymer, wherein the enlarged rubbery polymer includes a polymer coagulant, the graft copolymer includes an aromatic vinyl-based monomer unit and a vinyl cyan-based monomer unit, and the polymer coagulant includes an acid group-containing copolymer having a weight average molecular weight of 550,000 g/mol to 750,000 g/mol.
(10) The present invention provides a resin composition including the graft copolymer according to(9) abo ve.
(11) In (10) above, the present invention provides a resin composition wherein the resin composition includes 10 wt% to 40 wt% of the graft copolymer, and 60 wt% to 90 wt% of a copolymer including an aromatic vinyl-based monomer unit and a vinyl cyan-based monomer unit.

### ADVANTAGEOUS EFFECTS

When a graft copolymer is prepared according to the method for preparing a graft copolymer of the present invention, there is an effect of improving the chemical resistance of a resin composition including a graft copolymer without increasing the content of acrylonitrile or using a large-diameter rubbery polymer of 5,000 Å or greater as a rubbery polymer, or when preparing the resin composition, without adding silicone oil or alkylene oxide-based copolymer.

In addition, when a graft copolymer is prepared according to the method for preparing a graft copolymer of the present invention, there is an effect of improving the impact resistance of a resin composition including the graft copolymer while securing productivity since there is no need to reduce the gel content of a rubbery polymer.

In addition, there is an effect in that a resin composition including a graft copolymer prepared according to the method for preparing a graft copolymer of the present invention has excellent chemical resistance without the degradation in mechanical physical properties.

### MODE FOR CARRYING OUT THE INVENTION

Hereinafter, the present invention will be described in more detail to facilitate understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present invention, the term 'monomer unit' may represent a component, structure, or material itself derived from a monomer, and may represent, as a specific example, a repeating unit formed in a polymer as a result of the participation of an introduced monomer in a polymerization reaction when polymerizing the polymer.

The term 'composition' used in the present invention includes not only a reaction product and a decomposition product formed from materials of a corresponding composition, but also a mixture of materials including the corresponding composition.

The present invention provides a method for preparing a graft copolymer.

A method for preparing a graft copolymer according to the present invention includes introducing a polymer coagulant latex including a polymer coagulant to a rubbery polymer latex including a rubbery polymer and coagulating the polymer coagulant latex to prepare an enlarged rubbery polymer latex containing an enlarged rubbery polymer S10, and introducing an aromatic vinyl-based monomer and a vinyl cyan-based monomerto the enlarged rubbery polymer latex prepared in Step S10 above and performing graft polymerization to prepare a graft copolymer latex including a graft copolymer S20, wherein the polymer coagulant includes an acid group-containing copolymer having a weight average molecular weight of 550,000 g/mol to 750,000 g/mol, and the content of the vinyl cyan-based monomer introduced in Step S20 above is 15 wt% to 24 wt% based on the total content of the aromatic vinyl-based monomer and the vinyl cyan-based monomer.

First, the method for preparing a graft copolymer according to the present invention includes introducing a polymer coagulant latex including a polymer coagulant to a rubbery polymer latex including a rubbery polymer and coagulating the polymer coagulant latex to prepare an enlarged rubbery polymer latex containing an enlarged rubbery polymer S10.

Step S10 above is a step of enlarging a rubbery polymer latex including a pre-prepared rubbery polymer wit h a polymer coagulant, and may be performed by introducing a polymer coagulant latex including a polymer coagulant to a rubbery polymer latex, followed by stirring.

The rubbery polymer may be a conjugated diene-based polymer, and the rubbery polymer latex may be a conjugated diene-based polymer latex including a conjugated diene-based polymer.

The conjugated diene-based polymer latex including a conjugated diene-based polymer may be prepared by the polymerization of a conjugated diene-based monomer. As a specific example, the conjugated diene-based polymer latex may be prepared by Step S1 of emulsion-polymerizing a conjugated diene-based monomer.

The emulsion polymerization of Step S1 above may be performed in the presence of an emulsifier, and the emulsifier may be a fatty acid-based emulsifier or a dimer-based emulsifier of a fatty acid.

The content of the emulsifier in Step S1 above may be 0.1 parts by weight to 10.0 parts by weight, 0.8 parts by weight to 8.0 parts by weight, or 1.0 part by weight to 6.0 parts by weight based on 100 parts by weight of the conjugated diene-based monomer, and Step S1 above may be performed by radical polymerization using a peroxide-based, redox, or azo-based initiator which may be used in emulsion polymerization, and the redox initiator may be, for example, one or more selected from the group consisting of t-butyl hydroperoxide, diisopropylbenzene hydroperoxide, and cumene hydroperoxide, in which case, there is an effect of providing stable polymerization environment. In addition, when the redox initiator is used, the polymerization may be performed by further including ferrous sulfate, dextrose, and sodium pyrophosphate as a redox catalyst.

In addition, the emulsion polymerization of Step S1 above may be performed in an aqueous solvent, and the aqueous solvent may be ion-exchange water, and accordingly, a conjugated diene-based polymer emulsion-polymerized in Step S1 above may be obtained in the form of a latex in which conjugated diene-based polymer particles are dispersed in a colloid phase in the aqueous solvent.

The conjugated diene-based monomer may be one or more selected from the group consisting of 1,3-butadiene, 2,3-dimethyl-1,3-butadiene, piperylene, 3-butyl-1,3-octadiene, isoprene, and 2-phenyl-1,3-butadiene, and may be, as a specific example, 1,3-butadiene.

The average particle diameter of a rubbery polymer prepared from Step S10 above and before being enlarged in Step S10 may be 80 nm to 120 nm, 80 nm to 110 nm, or 90 nm to 110 nm, and within this range, there is an effect of facilitating the enlargement by a polymer coagulant.

In addition, the polymer coagulant latex introduced to the rubbery polymer latex in Step S10 above includes a polymer coagulant, and the polymer coagulant may include an acid group-containing copolymer. As an example, the acid group-containing copolymer may include an acid group-containing monomer unit formed by polymerizing an acid group-containing monomer, and the acid group-containing monomer may be one or more selected from the group consisting of an acrylic acid monomer, a methacrylic acid monomer, an itaconic acid monomer, a crotonic acid monomer, a fumaric acid monomer, a maleic acid monomer, and a citraconic acid monomer, and may be, preferably, one or more selected from the group consisting of an acrylic acid monomer and a methacrylic acid monomer. As a specific example, the acid group-containing copolymer may be prepared by polymerizing an acid group-containing monomer and a co-monomer copolymerizable therewith, and the co-monomer may be an alkyl (meth)acrylate-based monomer. As a specific example, the co-monomer may be one or more selected from the group consisting of methyl methacrylate, ethyl methacrylate, propyl methacrylate, n-butyl methacrylate, methyl acrylate, ethyl acrylate, propyl acrylate, and n-butyl acrylate.

In addition, the polymer coagulant latex may include an acid group-containing copolymer prepared through Step S2 of emulsion-polymerizing a (meth)acrylic acid monomer and a co-monomer copolymerizable therewith. The emulsion polymerization of Step S2 above may be performed in the presence of an emulsifier. The emulsifier may be one or more selected from the group consisting of sodium dicyclohexyl sulfosuccinate, sodium dihexyl sulfosuccinate, sodium di-2-ethylhexyl sulfosuccinate, potassium di-2-ethylhexyl sulfosuccinate, sodium dioctyl sulfosuccinate, sodium dodecyl sulfate, sodium dodecyl benzene sulfate, sodium octadecyl sulfate, sodium oleic sulfate sodium salt, sodium dodecyl sulfate, potassium octadecyl sulfate, potassium rosinate, and sodium rosinate. The content of the emulsifier in Step S2 above may be 0.001 parts by weight to 4.000 parts by weight, or 0.005 parts by weight to 2.000 parts by weight based on 100 parts by weight of the total monomers for preparing a polymer coagulant, and within this range, there is an effect in that polymerization stability is excellent.

Particularly, the polymer coagulant latex introduced to the rubbery polymer latex in Step S10 above includes a polymer coagulant, and the polymer coagulant may include an acid group-containing copolymer having a weight average molecular weight of 550,000 g/mol to 750,000 g/mol, 550,000 g/mol to 700,000 g/mol, or 580,000 g/mol to 700,000 g/mol. Within this range, there is an effect of simultaneously improving the impact resistance and chemical resistance of a resin composition including an enlarged rubbery polymer and a graft copolymer.

In addition, the acid group-containing copolymer may include an acid group-containing monomer unit in an amount of 1 wt% to 10 wt%, or 2 wt% to 10 wt%. Within this range, it is possible to sufficiently enlarge a rubbery polymer, and to suppress the generation of a coagulated product in Step S20 of preparing a graft copolymer latex from the enlarged rubbery polymer latex.

In addition, the acid group-containing copolymer may have an average particle diameter of 80 nm to 150 nm, or 85 nm to 140 nm. Within this range, when enlarging a rubbery polymer, it is possible to adjust the average particle diameter of the enlarged rubbery polymer to a desired average particle diameter.

In addition, in Step S10 above, the polymer coagulant latex may be introduced in an amount of 0.08 parts by weight to 3 parts by weight, or 0.1 parts by weight to 2.5 parts by weight based on 100 parts by weight of the rubbery polymer latex. Within this range, the mixing and coagulation of the rubbery polymer may be facilitated, and the particle diameter of the enlarged rubber polymer may be uniformly prepared.

The enlarged rubbery polymer latex prepared in Step S10 above may have a gel content of 88 wt% to 96 wt%. Within this range, when preparing a rubbery polymer, there is an effect of improving productivity since it is possible to increase a polymerization conversion rate.

Here, the gel content of the enlarged rubbery polymer means a gel content measured by Equation 1 below after coagulating the enlarged rubbery polymer latex using a dilute acid or metal salt, washing and drying the coagulated enlarged rubbery polymer latex in a vacuum oven at 60°C for 24 hours, and then cutting a rubber mass obtained thereby into small pieces with a pair of scissors, placing 1 g of a rubber piece in 100 g of toluene and storing the rubber piece in toluene in a dark room at room temperature for 48 hours, and then separating the same into a sol and a gel.Gel content (wt%) = Weight of insoluble matters (gel) / Weight of sample * 100

Next, the method for preparing a graft copolymer according to the present invention includes introducing an aromatic vinyl-based monomer and a vinyl cyan-based monomerto the enlarged rubbery polymer latex prepared in Step S10 aboveand performing graft polymerization to prepare a graft copolymer latex including a graft copolymer S20.

Step S20 above may be a step of graft-polymerizing an aromatic vinyl-based monomer and a vinyl cyan-based monomer with the enlarged rubbery polymer prepared in Step S10 in order to prepare a graft copolymer.

The graft polymerization of Step S20 above may be performed by emulsion polymerization, and the emulsion polymerization may be performed using an initiator and an aqueous solvent without introducing an emulsifier. In addition, the graft polymerization of Step S20 above may be performed on the enlarged rubbery polymer latex prepared in Step S10 above. In Step S20 above, that is, when an emulsifier is not introduced during the graft polymerization, the size of particles of a prepared graft copolymer is increased compared to when an emulsifier is introduced during the graft polymerization, and accordingly, the chemical resistance of a resin composition including the graft copolymer may be further improved, and furthermore, as the amount of an emulsifier is minimized during the graft polymerization, by-products generated in the graft polymerization reaction may be reduced, so that there is an effect of further improving the appearance quality of the resin composition including the graft copolymer.

Specifically, Step S20 above may be performed by radical polymerization using a peroxide-based, redox, or azo-based initiator at the time of the emulsion polymerization, and the redox initiator may be, for example, one or more selected from the group consisting of t-butyl hydroperoxide, diisopropylbenzene hydroperoxide, and cumene hydroperoxide, in which case, there is an effect of providing stable polymerization environment. In addition, when the redox initiator is used, the polymerization may be performed by further including ferrous sulfate, dextrose, and sodium pyrophosphate as a redox catalyst.

In addition, the graft emulsion polymerization of Step S20 above may be performed in an aqueous solvent, and the aqueous solvent may be ion-exchange water, and accordingly, a graft copolymer graft-polymerized in Step S20 above may be obtained in the form of a latex in which graft copolymer particles are dispersed in a colloid phase in the aqueous solvent.

The aromatic vinyl-based monomer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and may be, as a specific example, styrene.

The vinyl cyan-based monomer may be one or more selected from the group consisting of acrylonitrile, methacrylonitrile, ethacrylonitrile, phenylacrylonitrile, and α-chloroacrylonitrile, and may be, as a specific example, acrylonitrile.

Particularly, the content of the vinyl cyan-based monomer introduced in Step S10 above may be 15 wt% to 24 wt%, 17 wt% to 24 wt%, or 19 wt% to 23 wt% based on the total content of the aromatic vinyl-based monomer and the vinyl cyan-based monomer introduced in Step S20 above. Within this range, the graft polymerization reaction of the enlarged rubbery polymer with the aromatic vinyl-based monomer and the vinyl cyan-based monomer proceeds smoothly, and the dispersibility of a graft copolymer in a resin composition may be improved, so that the impact resistance and chemical resistance of the resin composition including the prepared graft copolymer may be secured.

In addition, graft copolymer particles in the graft copolymer latex prepared in Step S20 above may have a particle size distribution (PSD) of 0.45 to 0.6, 0.48 to 0.60, or 0.48 to 0.56. Here, the particle size distribution (PSD) of the graft copolymer particles is the particle diameter distribution of graft copolymer powder, and means a value obtained by diluting the graft copolymer powder with a dilute aqueous solution, followed by measuring the average particle diameter (D₅₀) and standard deviation of graft copolymer particles using Nicomp 380 equipment (product name, manufacturer: Nicomp), and then dividing the measured standard deviation by the average particle diameter (D₅₀). Within this range, the particle size distribution of the graft copolymer particles may be maintained at an appropriate level to improve chemical resistance, and at the same time, latex stability may be secured even when an emulsifier is not introduced during the graft polymerization, so that there is an effect in that polymerization stability is excellent.

In addition, the present invention provides a graft copolymer prepared in accordance with the method for preparing a graft copolymer.

The graft copolymer according to the present invention includes an enlarged rubbery polymer, wherein the enlarged rubbery polymer includes a polymer coagulant, the graft copolymer includes an aromatic vinyl-based monomer unit and a vinyl cyan-based monomer unit, and the polymer coagulant may include an acid group-containing copolymer having a weight average molecular weight of 550,000 g/mol to 750,000 g/mol.

The polymer coagulant, the enlarged rubbery polymer, the graft copolymer, and the acid group-containing copolymer may respectively be the polymer coagulant, the enlarged rubbery polymer, the graft copolymer, and the acid group-containing copolymer described in the method for preparing a graft copolymer, and the aromatic vinyl-based monomer unit and the vinyl cyan-based monomer unit may mean repeating units formed by the participation in a graft polymerization reaction by the aromatic vinyl-based monomer and the vinyl cyan-based monomer described in the method for preparing a graft copolymer.

In addition, the content of each of the polymer coagulant, the enlarged rubbery polymer, the aromatic vinyl-based monomer unit, the vinyl cyan-based monomer unit, and the acid group-containing copolymer may respectively be the same as the content of each component introduced during the preparation of a graft copolymer.

In addition, the present invention provides a resin composition including the graft copolymer.

The resin composition may include the graft copolymer and a styrene-based copolymer. The styrene-based copolymer may be a non-graft copolymer including an aromatic vinyl-based monomer unit, and may be, as a specific example, a copolymer including an aromatic vinyl-based monomer unit and a vinyl cyan-based monomer unit. Here, the styrene-based copolymer may be a matrix resin which is kneaded with the graft copolymer in the resin composition to form a matrix.

An aromatic vinyl-based monomer which forms the aromatic vinyl-based monomer unit of the styrene-based copolymer may be one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and may be, as a specific example, styrene.

A vinyl cyan-based monomer which forms the vinyl cyan-based monomer unit of the styrene-based copolymer may be one or more selected from the group consisting of acrylonitrile, methacrylonitrile, ethacrylonitrile, phenylacrylonitrile, and α-chloroacrylonitrile, and may be, as a specific example, acrylonitrile.

The resin composition may not include silicone oil and an alkylene oxide-based copolymer. The resin composition according to the present invention does not include silicone oil and an alkylene oxide-based copolymer, and thus, has excellent dispersibility of graft copolymer powder compared to a resin composition including silicone oil or an alkylene oxide-based copolymer, and due to the excellent dispersibility of graft copolymer powder, there is an effect in that tensile strength is excellent.

The resin composition may include 10 wt% to 40 wt%, 15 wt% to 35 wt%, or 20 wt% to 30 wt% of the graft copolymer, and 60 wt% to 90 wt%, 65 wt% to 85 wt%, or 70 wt% to 80 wt% of the copolymer including the aromatic vinyl-based monomer unit and the vinyl cyan-based monomer unit, and within this range, there is an effect of maximizing the chemical resistance and impact resistance of the resin composition including the graft copolymer while preventing the degradation in the processibility thereof.

According to an embodiment of the present invention, the resin composition may have an impact strength of 28.0 kgf·m/m or greater, 29.0 kgf·m/m or greater, or 30.0 kgf·m/m to 34.0 kgf·m/m at a thickness of 1/4 inch by the ASTM D256, and within this range, there is an effect of securing sufficient impact resistance of the resin composition including the graft copolymer.

In addition, according to an embodiment of the present invention, when a specimen of the resin composition of 200 mm × 12.7 mm × 3.2 mm is fixed to a curvature jig having a strain of 1.5%, and applied with 200 *µ*ℓ of a thinner, it may take 250 sec or longer, 300 sec or longer, or 400 sec or longer before cracks are generated in the specimen, and within this range, there is an effect of securing sufficient impact resistance of the resin composition including the graft copolymer.

In addition, according to an embodiment of the present invention, the resin composition may have a tensile strength of 445.0 kg/cm² or greater, 450.0 kg/cm² or greater, or 455.0 kg/cm² or greater measured by fixing a specimen of the resin composition of 200 mm × 12.7 mm × 3.2 mm to a curvature jig having a strain of 1.5%, applying the same with 200 *µ*ℓ of PVE refrigerant oil, and then collecting the specimen from the curvature jig when 24 hours have elapsed to perform the measurement by the ASTM D638 (50 mm/min).

Hereinafter, embodiments of the present invention will be described in detail so that those skilled in the art may easily carry out the present invention. However, the present invention may be embodied in many different forms, and is not limited to the embodiments set forth herein.

### Preparation Examples

### Preparation Example 1

To a reactor, 170 parts by weight of distilled water, and as an emulsifier, 0.6 parts by weight of sodium dioctyl sulfosuccinate were introduced, and stirred while raising the temperature to 70°C, and then 40 parts by weight of ethyl acrylate, and as an initiator, 0.1 parts by weight and potassium persulfate were introduced thereto to initiate a reaction, followed by performing polymerization for 90 minutes to prepare a core. Thereafter, in the presence of the core, a mixture prepared in a separate container and including 55 parts by weight of ethyl acrylate, 5 parts by weight of methacrylic acid, and 0.3 parts by weight of sodium dioctyl sulfosuccinate, and 0.3 parts by weight of potassium persulfate were continuously introduced to be reacted for 2 hours to form a shell, thereby preparing an ethyl acrylate-methacrylic acid copolymer latex including an ethyl acrylate-methacrylic acid copolymer. At this time, the prepared ethyl acrylate-methacrylic acid copolymer had an average particle diameter of 105 nm, and a weight average molecular weight of 700,000 g/mol.

### Preparation Example 2

To a reactor, 190 parts by weight of distilled water, and as an emulsifier, 0.5 parts by weight of sodium dioctyl sulfosuccinate were introduced, and stirred while raising the temperature to 70°C, and then 10 parts by weight of ethyl acrylate, and as an initiator, 0.1 parts by weight and potassium persulfate were introduced thereto to initiate a reaction, and then, a mixture prepared in a separate container and including 81 parts by weight of ethyl acrylate, 9 parts by weight of methacrylic acid, and 0.5 parts by weight of sodium dioctyl sulfosuccinate, and 0.6 parts by weight of potassium persulfate were continuously introduced to be reacted for 2 hours and 40 minutes to form a shell, thereby preparing an ethyl acrylate-methacrylic acid copolymer latex in which the average particle diameter of an ethyl acrylate-methacrylic acid copolymer was 110 nm and the weight average molecular weight of the ethyl acrylate-methacrylic acid copolymer was 580,000 g/mol.

### Preparation Example 3

To a reactor, 170 parts by weight of distilled water, and as an emulsifier, 0.2 parts by weight of sodium dioctyl sulfosuccinate, and as an initiator, 0.5 parts by weight and potassium persulfate were introduced, and stirred while raising the temperature to 70°C. Thereafter, a mixture in which 91 parts by weight of butyl acrylate, 9 parts by weight of methacrylic acid, and as an emulsifier, 0.5 parts by weight of sodium dioctyl sulfosuccinate were uniformly mixed, and 0.1 parts by weight of potassium persulfate were continuously introduced to the reactor for 4 hours to prepare a butyl acrylate-methacrylic acid copolymer latex including a butyl acrylate-methacrylic acid copolymer. At this time, the prepared butyl acrylate-methacrylic acid copolymer had an average particle diameter of 125 nm, and a weight average molecular weight of 820,000 g/mol.

### Preparation Example 4

To a reactor, 170 parts by weight of distilled water, and as an emulsifier, 0.2 parts by weight of sodium dioctyl sulfosuccinate, and as an initiator, 0.5 parts by weight and potassium persulfate were introduced, and stirred while raising the temperature to 70°C. Thereafter, a mixture in which 91 parts by weight of butyl acrylate, 9 parts by weight of methacrylic acid, and as an emulsifier, 0.5 parts by weight of sodium dioctyl sulfosuccinate were uniformly mixed, and 1.0 parts by weight of potassium persulfate were continuously introduced to the reactor for 4 hours to prepare a butyl acrylate-methacrylic acid copolymer latex including a butyl acrylate-methacrylic acid copolymer. At this time, the prepared butyl acrylate-methacrylic acid copolymer had an average particle diameter of 115 nm, and a weight average molecular weight of 400,000 g/mol.

### Examples

### Example 1

### <Preparation of rubbery polymer latex>

To a polymerization reactor substituted with nitrogen, 75 parts by weight of ion-exchange water, 90 parts by weight of 1,3-butadiene, 1.5 parts by weight of fatty acid soap, 0.1 parts by weight of t-dodecyl mercaptan, 0.1 parts by weight of K₂CO₃, and 0.15 parts by weight of t-butyl hydroperoxide were introduced, and then stirred to be sufficiently mixed. Thereafter, the temperature inside the polymerization reactor was raised to 55°C, and then 0.06 parts by weight of dextrose, 0.005 parts by weight of sodium pyrophosphate, and 0.0025 parts by weight of ferrous sulfate were introduced at once, followed by initiating a polymerization reaction. At a point of time at which the polymerization conversion rate was 35%, 0.3 parts by weight of potassium persulfate was introduced, and then the temperature was raised to 72°C to perform a polymerization reaction, and then, at a point of time at which the polymerization conversion rate of 65%, 10 parts by weight of 1,3-butadiene was introduced thereto, followed by terminating the reaction at a point of time at which the polymerization conversion rate of 95% to obtain a rubbery polymer latex.

### <Preparation of enlarged rubbery polymer latex and preparation of graft copolymer latex>

To a reactor equipped with a stirrer, 60 parts by weight (based on solids) of the above-prepared rubbery polymer latex was introduced, and while stirring the rubbery polymer latex at 60°C, 1.0 part by weight (based on solids) of the ethyl acrylate-methacrylic acid copolymer latex prepared in Preparation Example 1 was introduced thereto as a polymer coagulant, followed by coagulating the rubbery polymer for 60 minutes to prepare an enlarged rubbery polymer latex. Thereafter, 0.02 parts by weight of cumene hydroperoxide, 0.1 parts by weight of dextrose, 0.07 parts by weight of sodium pyrophosphate, and 0.002 parts by weight of ferrous sulfate were introduced at once, and while raising the temperature inside the reactor to 70°C over the course of 20 minutes, 7.6 parts by weight of acrylonitrile and 32.4 parts by weight (weight ratio of acrylonitrile and styrene of 19:81) of styrene, 0.4 parts by weight of t-dodecyl mercaptan, and 0.15 parts by weight of cumene hydroperoxide were continuously introduced at a constant rate for 3 hours, followed by terminating the reaction to prepare a graft copolymer latex.

### <Preparation of graft copolymer powder>

To the above-prepared graft copolymer latex, an aqueous solution of magnesium sulfate (MgSO₄) was introduced, coagulated, aged, washed, dehydrated, and dried to prepare graft copolymer powder.

### <Preparation of resin composition>

30 parts by weight of the prepared graft copolymer powder, 70 parts by weight of a styrene-acrylonitrile copolymer (Produced by LG Chemical Corporation, product name 92HR), a lubricant, and a heat stabilizer were introduced to a twin-screw extruder, kneaded, and extruded at 200°C to prepare resin composition pellets.

### Example 2

The same was performed in the same manner as in Example 1, except that in Example 1, when preparing the enlarged rubbery polymer latex, 1.8 parts by weight (based on solids) of the ethyl acrylate-methacrylic acid copolymer latex prepared in Preparation Example 2 was introduced instead of 1.0 part by weight (based on solids) of the ethyl acrylate-methacrylic acid copolymer latex prepared in Preparation Example 1, and when preparing the graft copolymer latex, 9.2 parts by weight of acrylonitrile instead of 7.6 parts by weight thereof, and 30.8 parts by weight of styrene instead of 32.4 parts by weight thereof (weight ratio of acrylonitrile and styrene of 23:77) were introduced.

### Example 3

The same was performed in the same manner as in Example 1, except that in Example 1, when preparing the enlarged rubbery polymer latex, 2.0 parts by weight (based on solids) of the ethyl acrylate-methacrylic acid copolymer latex prepared in Preparation Example 1 was introduced instead of 1.0 part by weight (based on solids) thereof, and when preparing the graft copolymer latex, 8.8 parts by weight of acrylonitrile instead of 7.6 parts by weight thereof, and 31.2 parts by weight of styrene instead of 32.4 parts by weight thereof (weight ratio of acrylonitrile and styrene of 22:78) were introduced.

### Comparative Example 1

The same was performed in the same manner as in Example 1, except that in Example 1, when preparing the enlarged rubbery polymer latex, 2.5 parts by weight (based on solids) of the ethyl acrylate-methacrylic acid copolymer latex prepared in Preparation Example 2 was introduced instead of 1.0 part by weight (based on solids) of the ethyl acrylate-methacrylic acid copolymer latex prepared in Preparation Example 1, and when preparing the graft copolymer latex, 10 parts by weight of acrylonitrile instead of 7.6 parts by weight thereof, and 30 parts by weight of styrene instead of 32.4 parts by weight thereof (weight ratio of acrylonitrile and styrene of 25:75) were introduced.

### Comparative Example 2

The same was performed in the same manner as in Example 1, except that in Example 1, when preparing the enlarged rubbery polymer latex, 1.0 part by weight (based on solids) of the butyl acrylate-methacrylic acid copolymer latex prepared in Preparation Example 3 was introduced instead of 1.0 part by weight (based on solids) of the ethyl acrylate-methacrylic acid copolymer latex prepared in Preparation Example 1.

### Comparative Example 3

The same was performed in the same manner as in Example 1, except that in Example 1, when preparing the enlarged rubbery polymer latex, 1.8 parts by weight (based on solids) of the butyl acrylate-methacrylic acid copolymer latex prepared in Preparation Example 4 was introduced instead of 1.0 part by weight (based on solids) of the ethyl acrylate-methacrylic acid copolymer latex prepared in Preparation Example 1, and when preparing the graft copolymer latex, 9.2 parts by weight of acrylonitrile instead of 7.6 parts by weight thereof, and 30.8 parts by weight of styrene instead of 32.4 parts by weight thereof (weight ratio of acrylonitrile and styrene of 23:77) were introduced.

### Comparative Example 4

### <Preparation of rubbery polymer latex>

To a polymerization reactor substituted with nitrogen, 60 parts by weight of ion-exchange water, 75 parts by weight of 1,3-butadiene, 1.0 part by weight of potassium rosinate salt, 0.8 parts by weight of fatty acid soap, 0.3 parts by weight of t-dodecyl mercaptan, 0.5 parts by weight of K₂CO₃, and 0.3 parts by weight of t-butyl hydroperoxide were introduced, and then stirred to be sufficiently mixed. Thereafter, the temperature inside the polymerization reactor was raised to 70°C to initiate a polymerization reaction. At a point of time at which the polymerization conversion rate of 35%, 25 parts by weight of 1,3-butadiene was introduced, and then 0.15 parts by weight of potassium persulfate was continuously introduced thereto, followed by terminating the reaction at a point of time at which the polymerization conversion rate of 90% to obtain a rubbery polymer latex.

### <Preparation of graft copolymer latex and preparation of graft copolymer powder>

To a reactor equipped with a stirrer, 60 parts by weight (based on solids) of the above-prepared rubbery polymer latex, 0.02 parts by weight of hydroperoxide, 0.1 parts by weight of dextrose, 0.07 parts by weight of sodium pyrophosphate, and 0.002 parts by weight of ferrous sulfate were introduced at once, and while raising the temperature inside the reactor to 70°C over the course of 20 minutes, 10 parts by weight of acrylonitrile and 30 parts by weight (weight ratio of acrylonitrile and styrene of 25:75) of styrene, 0.4 parts by weight of t-dodecyl mercaptan, and 0.15 parts by weight of cumene hydroperoxide were continuously introduced at a constant rate for 3 hours, followed by terminating the reaction to prepare a graft copolymer latex. Thereafter, to the above-prepared graft copolymer latex, an aqueous solution of magnesium sulfate (MgSO₄) was introduced, coagulated, aged, washed, dehydrated, and dried to prepare graft copolymer powder.

### <Preparation of resin composition>

30 parts by weight of the prepared graft copolymer powder, 70 parts by weight of a styrene-acrylonitrile copolymer (Produced by LG Chemical Corporation, product name 92HR), 0.5 parts by weight of silicone oil (Produced by Dow corning Corporation, product name 200 Fluid), a lubricant, and a heat stabilizer were introduced to a twin-screw extruder, kneaded, and extruded at 200°C to prepare resin composition pellets.

### Comparative Example 5

The same was performed in the same manner as in Comparative Example 4, except that in Comparative Example 4, when preparing the rubber polymer latex, the reaction was terminated when the polymerization conversion rate was 95%, instead of when the polymerization conversion rate was 90%, and when preparing the resin composition, 1 part by weight of an alkylene oxide-based copolymer (Produced by BASF Corporation, product name Pluronic PE 6800) was introduced instead of 0.5 parts by weight of the silicone oil (Produced by Dow corning Corporation, product name 200 Fluid).

### Comparative Example 6

The same was performed in the same manner as in Comparative Example 4, except that in Comparative Example 4, when preparing the graft copolymer latex, 11.2 parts by weight of acrylonitrile instead of 10 parts by weight thereof, and 28.8 parts by weight of styrene instead of 30 parts by weight thereof (weight ratio of acrylonitrile and styrene of 28:72) were introduced, and when preparing the resin composition, the silicone oil (Produced by Dow corning Corporation, product name 200 Fluid) was not introduced.

### Comparative Example 7

The same was performed in the same manner as in Comparative Example 4, except that in Comparative Example 4, when preparing the graft copolymer latex, 8 parts by weight of acrylonitrile instead of 10 parts by weight thereof, and 32 parts by weight of styrene instead of 30 parts by weight thereof (weight ratio of acrylonitrile and styrene of 20:80) were introduced, and when preparing the resin composition, 1 part by weight of an alkylene oxide-based copolymer (Produced by BASF Corporation, product name Pluronic PE 6800) was introduced instead of 0.5 parts by weight of the silicone oil (Produced by Dow corning Corporation, product name 200 Fluid).

### Comparative Example 8

The same was performed in the same manner as in Example 1, except that in Example 1, when preparing the enlarged rubbery polymer latex, 2.0 parts by weight (based on solids) of the ethyl acrylate-methacrylic acid copolymer latex prepared in Preparation Example 1 was introduced instead of 1.0 part by weight (based on solids) thereof, and when preparing the graft copolymer latex, 5.2 parts by weight of acrylonitrile instead of 7.6 parts by weight thereof, and 34.8 parts by weight of styrene instead of 32.4 parts by weight thereof (weight ratio of acrylonitrile and styrene of 13:87) were introduced.

### Experimental Examples

### Experimental Example 1

For the enlarged rubbery polymer latex or rubbery polymer latex prepared in Examples 1 to 3 and Comparative Examples 1 to 8, the gel content of the enlarged rubbery polymer or rubbery polymer, the amount of the acid group-containing copolymer introduced, and the weight average molecular weight of the acid group-containing copolymer, along with whether enlarged or not, are shown in Table 1 below, and when preparing the graft copolymer latex, the ratio of the acrylonitrile introduced, the particle size distribution of the graft copolymer particles, and the content of the coagulated product formed were measured and are shown in Table 1 below.
* Gel content of enlarged rubbery polymer (wt%): The gel content was measured by Equation 1 below after coagulating the enlarged rubbery polymer latex using a dilute acid or metal salt, washing and drying the coagulated enlarged rubbery polymer latex in a vacuum oven at 60°C for 24 hours, and then cutting a rubber mass obtained thereby into small pieces with a pair of scissors, placing 1 g of a rubber piece in 100 g of toluene and storing the rubber piece in toluene in a dark room at room temperature for 48 hours, and then separating the same into a sol and a gel. Gel content (wt%) = Weight of insoluble matters (gel) / Weight of sample * 100
* Ratio of acrylonitrile (wt%): It is the ratio of acrylonitrile introduced in a preparation process of graft copolymer latex, and the ratio of acrylonitrile was calculated by Equation 2 below. Ratio of acrylonitrile (wt%) = Content of acrylonitrile introduced in preparation process of graft copolymer latex / Total content of styrene and acrylonitrile in preparation process of graft copolymer latex * 100
* Average particle diameter (nm) of acid group-containing copolymer: It is the average particle diameter of the acid group-containing copolymer included in the polymer coagulant prepared by each of Preparation Examples 1 to 4, which was measured by diluting the acrylate-methacrylic acid copolymer latex prepared in each of Preparation Examples 1 to 4 with distilled water to a concentration of 200 ppm and then by a dynamic light scattering (DLS) method in accordance with the ISO 2022412 using Nicomp 380 equipment (product name, manufacturer: Nicomp).
* Weight average molecular weight of acid group-containing copolymer (g/mol): It is the weight average molecular weight of the acid group-containing copolymer included in the polymer coagulant prepared by each of Preparation Examples 1 to 4, and the weight average molecular weight (g/mol) of the acid group-containing copolymer of each of Preparation Examples 1 to 4 was measured by gel permeation chromatography (GPC) (PL GPC220, Agilent Technologies) under the following conditions.
   - Column: Agilent Olexis
   - Solvent: Tetrahydrofuran (THF)
   - Flow rate: 1.0 ml/min
   - Sample concentration: 1.0 mg/ml
   - Injection amount: 200 µl
   - Column temperature: 160°C
   - Detector: Agilent High Temperature RI detector
   - Standard: Polystyrene (Calibrate with a tertiary function)
   - Data processing: Cirrus
* Particle size distribution (PSD) of graft copolymer particles: It is the particle diameter distribution of graft copolymer powder, a value obtained by diluting the graft copolymer powder with a dilute aqueous solution, followed by measuring the average particle diameter (D₅₀) and standard deviation of graft copolymer particles using Nicomp 380 equipment (product name, manufacturer: Nicomp), and then dividing the measured standard deviation by the average particle diameter (D₅₀).
* Content of coagulated product formed during preparation of graft copolymer latex (wt%): The prepared graft copolymer latex was filtered through a 100 mesh net, the graft copolymer latex which did not pass through the net was dried with a hot air dryer at 100°C for 1 hour, and then the content of a coagulated product formed during the preparation of a graft copolymer was calculated by Equation 3 below.Content of coagulated product formed during preparation of graft copolymer latex (wt%) = Weight of hot-air-dried graft copolymer latex not passed through mesh / total weight of hot-air-dried graft copolymer latex * 100

**[Table 1]**

| Classifications | Examples | | | Comparative Examples | | | | | | | |
|---|---|---|---|---|---|---|---|---|---|---|---|
| | 1 | 2 | 3 | 1 | 2 | 3 | 4 | 5 | 6 | 7 | 8 |
| Gel content of rubbery polymer (wt%) | 92 | 92 | 92 | 92 | 92 | 92 | 80 | 80 | 80 | 80 | 92 |
| Enlarged or not | ○ | ○ | ○ | ○ | ○ | ○ | X | X | X | X | ○ |
| Amount of acid group-containing copolymer introduced based on 100 parts by weight of rubbery polymer (parts by weight) | 1.0 | 1.8 | 2.0 | 2.5 | 1.0 | 1.8 | - | - | - | - | 2.0 |
| Weight average molecular weight of acid group-containing copolymer (g/mol) | 700 ,00 0 | 580 ,00 0 | 700 ,00 0 | 580 ,00 0 | 820 ,00 0 | 400 ,00 0 | - | - | - | - | 700 ,00 0 |
| Ratio of acrylonitrile (wt%) | 19 | 23 | 22 | 25 | 19 | 23 | 25 | 25 | 28 | 20 | 13 |
| Particle size diameter distribution of graft copolymer particles (PSD) | 0.5 6 | 0.4 8 | 0.4 5 | 0.4 | 0.6 2 | 0.4 8 | 0.3 | 0.3 | 0.3 | 0.3 | 0.5 |
| Content of coagulated product formed during preparation of graft copolymer latex (wt%) | 0.2 | <0. 1 | 0.2 | <0. 1 | 2.0 | <0. 1 | <0. 1 | <0. 1 | <0. 1 | <0. 1 | 0.2 |

As shown in Table 1 above, in the cases of Examples 1 to 3 in which the gel content of the rubbery polymer was regulated to be in the range of 88 wt% to 96 wt% during the process of preparing the graft copolymer latex, the polymerization conversion rate may be increased when preparing a graft copolymer compared to the cases of Comparative Examples 4 to 7 in which the gel content of the rubbery polymer was regulated to 80 wt%, so that the productivity may be improved.

In addition, in the cases of Examples 1 to 3 in which the acid group-containing copolymer having a weight average molecular weight in the range of 550,000 g/mol to 750,000 g/mol was used during the process of preparing the enlarged rubbery polymer latex, it has been confirmed that the content of a coagulated product formed during the preparation of the graft copolymer latex was significantly small compared to the case of Comparative Example 2 in which the acid group-containing copolymer having a weight average molecular weight of 820,000 g/mol was used.

### Experimental Example 2

The pellets prepared in Examples 1 to 3 and Comparative Examples 1 to 8 were injected at 220°C, and the tensile strength, melt index, impact strength, and chemical resistance were measured by the following method, and are shown in Table 2 below, along with whether or not silicone oil and an alkylene oxide copolymer were included.
* Tensile strength (kg/cm²): It was measure using the INSTRON 4465 device and by the ASTM D638 (50 mm/min) method.
* Melt index (g/10 min): it was measured under the conditions of 220°C and 10 kg by the ASTM D1238 method.
* Impact strength (kgf-m/m): The notched izod impact strength was measured by the ASTM D256 method, and using a 1/4 inch-thick specimen by making a notch in the specimen at room temperature (23°C).
* Chemical resistance 1 (Cutting time after applying thinner, SEC)): A pellet specimen of 200 mm × 12.7 mm × 3.2 mm was fixed to a curvature jig having a strain of 1.5%, and applied with 200 *µ*ℓ of a thinner to measure the time until cracks were generated in the pellet specimen.
* Chemical resistance 2 (Tensile strength (kg/cm²) when 24 hours have elapsed after applying PVE refrigerant oil): A specimen of 200 mm × 12.7 mm × 3.2 mm was fixed to a curvature jig having a strain of 1.5%, and 200 *µ*ℓ of a PVE refrigerant oil was applied to the specimen. After 24 hours, the specimen was collected in the curvature jig, and the tensile strength was measured by the ASTM D638 (50 mm/min) method using the INSTRON 4465 device.

**[Table 2]**

| Classifications | Examples | | | Comparative Examples | | | | | | | |
|---|---|---|---|---|---|---|---|---|---|---|---|
| | 1 | 2 | 3 | 1 | 2 | 3 | 4 | 5 | 6 | 7 | 8 |
| Whether or not silicone oil is included | X | X | X | X | X | X | ○ | X | X | X | X |
| Whether or not alkylene oxide copolymer is included | X | X | X | X | X | X | X | ○ | X | ○ | X |
| Tensile strength (kg/cm²) | 469 | 473 | 470 | 480 | N.A.¹⁾ | 480 | 450 | 465 | 485 | 455 | 440 |
| Melt index (g/10 min) | 20 | 18. 8 | 19 | 19. 5 | N.A.¹⁾ | 18. 8 | 19 | 19 | 19 | 20 | 22 |
| Impact strength (kgf·m/m) | 30 | 34 | 31 | 26 | N.A .¹⁾ | 25 | 33 | 30 | 25 | 23 | 18 |
| Cutting time after thinner application (SEC) | 500 | 400 | 500 | 150 | N.A .¹⁾ | 200 | 400 | 100 | 100 | 100 | 300 |
| Tensile strength when 24 hours have elapsed after PVE refrigerant oil application (kg/cm²) | 457 | 460 | 455 | N.A .¹⁾ | N.A .¹⁾ | 440 | 435 | 430 | 465 | 380 | 400 |
| 1) N.A.: Not Available (Not measurable) | | | | | | | | | | | |

As shown in Tables 1 and 2, in the cases of Examples 1 to 3 in which an acid group-containing copolymer having a weight average molecular weight in the range of 550,000 g/mol to 750,000 g/mol was used in the process of preparing the enlarged rubbery polymer latex, and the content of the vinyl cyan-based monomer was controlled within the range of 15 wt% to 24 wt% based on the total content of the aromatic vinyl-based monomer and the vinyl cyan-based monomer introduced in the process of preparing the graft copolymer latex according to the present invention, it has been confirmed that the impact resistance and chemical resistance were excellent without the degradation in mechanical physical properties, compared to Comparative Examples 1 to 8.

Specifically, in the case of Comparative Example 1 in which the ratio of introduced acrylonitrile was 25 wt% when preparing the graft copolymer, even when the acid group-containing copolymer having a weight average molecular weight in the range of 550,000 g/mol to 750,000 g/mol was used in the process of preparing the enlarged rubbery polymer latex, the dispersibility of the graft copolymer in the resin composition was degraded compared to Examples 1 to 3, so that it has been confirmed that the mechanical physical properties and impact resistance were degraded. In addition, compared to Examples 1 to 3, the chemical resistance of Comparative Example 1 was significantly degraded, so that it has been confirmed that it was impossible to measure the tensile strength when 24 hours elapsed after the application of the PVE refrigerant oil.

In addition, in the case of Comparative Example 2 in which an acid group-containing copolymer having a high weight average molecular weight was used when preparing the enlarged rubbery polymer latex, even when the ratio of acrylonitrile was regulated to be in the range limited by the present invention when preparing the graft copolymer, the content of a coagulated product formed during the preparation of the graft copolymer latex was rapidly increased, so that it has been confirmed that it was impossible to measure the tensile strength, melt index, impact strength, and chemical resistance, and in the case of Comparative Example 2 in which an acid group-containing copolymer having a low weight average molecular weight was used when preparing the enlarged rubbery polymer latex, even when the ratio of acrylonitrile was regulated to be in the range limited by the present invention when preparing the graft copolymer, it has been confirmed that the impact resistance and chemical resistance were significantly degraded compared to Examples 1 to 3.

In addition, in the cases of Comparative Examples 4 to 7 in which enlargement was not performed, it has been confirmed that Comparative Example 6 had degraded impact resistance compared to Examples 1 to 3, and had significantly degraded chemical resistance, so that it has been confirmed that the cutting time was reduced after the application of the thinner. In addition, in the case of Comparative Example 4, although the silicone oil was introduced during the preparation of the resin composition in order to improve chemical resistance, it has been confirmed that the mechanical physical properties were degraded compared to Examples 1 to 3, and the chemical resistance was significantly degraded, so that it has been confirmed that the tensile strength at the time when 24 hours elapsed after the application of the PVE refrigerant oil was degraded. In addition, in the case of Comparative Example 5, although the alkylene oxide copolymer was introduced during the preparation of the resin composition in order to improve chemical resistance, it has been confirmed that the chemical resistance was degraded compared to Examples 1 to 3, and thus, the cutting time after the application of the thinner was reduced, and the tensile strength at the time when 24 hours elapsed after the application of the PVE refrigerant oil was degraded. In addition, in the case of Comparative Example 7, although the alkylene oxide copolymer was also introduced during the preparation of the resin composition in order to improve chemical resistance, it has been confirmed that the impact resistance and chemical resistance were significantly degraded compared to Examples 1 to 3.

In addition, in the case of Comparative Example 8 in which the ratio of introduced acrylonitrile was 13 wt% when preparing the graft copolymer, even when the acid group-containing copolymer having a weight average molecular weight in the range of 550,000 g/mol to 750,000 g/mol was used in the process of preparing the enlarged rubbery polymer latex, the dispersibility of the graft copolymer in the resin composition was degraded compared to Examples 1 to 3, and at the same time, the ratio of acrylonitrile affecting the chemical resistance was low, so that it has been confirmed that the mechanical physical properties and impact resistance were both poor.

From the above results, it can be confirmed that the resin composition including the graft copolymer prepared according to the method for preparing a graft copolymer according to the present invention has excellent impact resistance and chemical resistance without the degradation in mechanical physical properties.

## Claims

1. A method for preparing a graft copolymer, the method comprising:
introducing a polymer coagulant latex including a polymer coagulant to a rubbery polymer latex including a rubbery polymer and coagulating the polymer coagulant latex to prepare an enlarged rubbery polymer latex containing an enlarged rubbery polymer (S10); and
introducing an aromatic vinyl-based monomer and a vinyl cyan-based monomerto the enlarged rubbery polymer latex prepared in Step (S10) above and performing graft polymerization to prepare a graft copolymer latex including a graft copolymer (S20),
wherein:
the polymer coagulant includes an acid group-containing copolymer having a weight average molecular weight of 550,000 g/mol to 750,000 g/mol, as measured in the description,; and
the content of the vinyl cyan-based monomer introduced in Step (S20) above is 15 wt% to 24 wt% based on the total content of the aromatic vinyl-based monomer and the vinyl cyan-based monomer.

2. The method of claim 1, wherein the acid group-containing copolymer comprises 1 wt% to 10 wt% of an acid group-containing monomer unit.

3. The method of claim 1, wherein the acid group-containing copolymer has an average particle diameter of 85 nm to 140 nm, as measured in the description.

4. The method of claim 1, wherein the polymer coagulant latex is introduced in an amount of 0.08 parts by weight to 3 parts by weight (based on solids) based on 100 parts by weight (based on solids) of the rubbery polymer latex in Step (S10) above.

5. The method of claim 1, wherein the rubbery polymer is a conjugated diene-based polymer.

6. The method of claim 1, wherein the enlarged rubbery polymer latex prepared in Step (S10) above has a gel content of 88 wt% to 96 wt%.

7. The method of claim 1, wherein Step (S20) above is performed without introducing an emulsifier.

8. The method of claim 1, wherein the graft copolymer particles prepared in Step (S20) above have a particle size distribution (PSD) of 0.45 to 0.6.

9. A graft copolymer comprising an enlarged rubbery polymer, wherein:
the enlarged rubbery polymer includes a polymer coagulant;
the graft copolymer includes an aromatic vinyl-based monomer unit and a vinyl cyan-based monomer unit; and
the polymer coagulant includes an acid group-containing copolymer having a weight average molecular weight of 550,000 g/mol to 750,000 g/mol, as measured in the description.

10. A resin composition comprising the graft copolymer according to claim 9.

11. The resin composition of claim 10, wherein the resin composition comprises 10 wt% to 40 wt% of the graft copolymer, and 60 wt% to 90 wt% of a copolymer including an aromatic vinyl-based monomer unit and a vinyl cyan-based monomer unit.

## Patentansprüche

1. Verfahren zur Herstellung eines Pfropfcopolymers, wobei das Verfahren umfasst:
Einbringen eines Polymerkoagulationslatex, der ein Polymerkoagulationsmittel enthält, in einen kautschukartigen Polymerlatex, der ein kautschukartiges Polymer enthält, und Koagulieren des Polymerkoagulationslatex, um einen vergrößerten kautschukartigen Polymerlatex herzustellen, der ein vergrößertes kautschukartiges Polymer enthält (S10); und
Einbringen eines Monomers auf Basis von aromatischem Vinyl und eines Monomers auf Basis von Vinylcyan in den vergrößerten kautschukartigen Polymerlatex, der in dem obigen Schritt (S10) hergestellt wurde, und Durchführen einer Pfropfpolymerisation, um einen Pfropfcopolymerlatex herzustellen, der ein Pfropfcopolymer enthält (S20),
wobei:
das Polymerkoagulationsmittel ein säuregruppenhaltiges Copolymer mit einem gewichtsgemittelten Molekulargewicht von 550.000 g/mol bis 750.000 g/mol, wie in der Beschreibung gemessen, enthält; und
der Gehalt des Monomers auf Basis von Vinylcyan, das in dem obigen Schritt (S20) eingebracht wurde, 15 Gew.-% bis 24 Gew.-%, bezogen auf den Gesamtgehalt des Monomers auf Basis von aromatischem Vinyl und des Monomers auf Basis von Vinylcyan, beträgt.

2. Verfahren nach Anspruch 1, wobei das säuregruppenhaltige Copolymer 1 Gew.-% bis 10 Gew.-% einer säuregruppenhaltigen Monomereinheit umfasst.

3. Verfahren nach Anspruch 1, wobei das säuregruppenhaltige Copolymer einen durchschnittlichen Teilchendurchmesser von 85 nm bis 140 nm, wie in der Beschreibung gemessen, aufweist.

4. Verfahren nach Anspruch 1, wobei der Polymerkoagulationslatex in einer Menge von 0,08 Gewichtsteilen bis 3 Gewichtsteilen (bezogen auf Feststoffe), bezogen auf 100 Gewichtsteile (bezogen auf Feststoffe) des kautschukartigen Polymerlatex in dem obigen Schritt (S10), eingebracht wird.

5. Verfahren nach Anspruch 1, wobei das kautschukartige Polymer ein Polymer auf Basis eines konjugierten Diens ist.

6. Verfahren nach Anspruch 1, wobei der vergrößerte kautschukartige Polymerlatex, der in dem obigen Schritt (S10) hergestellt wurde, einen Gelgehalt von 88 Gew.-% bis 96 Gew.-% aufweist.

7. Verfahren nach Anspruch 1, wobei der obige Schritt (S20) ohne Einbringen eines Emulgators durchgeführt wird.

8. Verfahren nach Anspruch 1, wobei die Pfropfcopolymerteilchen, die in dem obigen Schritt (S20) hergestellt wurden, eine Teilchengrößenverteilung (PSD) von 0,45 bis 0,6 aufweisen.

9. Pfropfcopolymer, umfassend ein vergrößertes gummiartiges Polymer, wobei:
das vergrößerte gummiartige Polymer ein Polymerkoagulationsmittel enthält;
das Pfropfcopolymer eine Monomereinheit auf Basis von aromatischem Vinyl und eine Monomereinheit auf Basis von Vinylcyan enthält; und
das Polymerkoagulationsmittel ein säuregruppenhaltiges Copolymer mit einem gewichtsgemittelten Molekulargewicht von 550.000 g/mol bis 750.000 g/mol, wie in der Beschreibung gemessen, enthält.

10. Harzzusammensetzung, umfassend das Pfropfcopolymer nach Anspruch 9.

11. Harzzusammensetzung nach Anspruch 10, wobei die Harzzusammensetzung 10 Gew.-% bis 40 Gew.-% des Pfropfcopolymers und 60 Gew.-% bis 90 Gew.-% eines Copolymers, das eine Monomereinheit auf Basis von aromatischem Vinyl und eine Monomereinheit auf Basis von Vinylcyan enthält, umfasst.

## Revendications

1. Méthode de préparation d'un copolymère greffé, la méthode comprenant :
l'introduction d'un latex polymère coagulant incluant un polymère coagulant dans un latex polymère caoutchouteux incluant un polymère caoutchouteux, et la coagulation du latex polymère coagulant pour préparer un latex polymère caoutchouteux à particules de taille augmentée contenant un polymère caoutchouteux à particules de taille augmentée (S10) ; et
l'introduction d'un monomère à base d'un vinyle aromatique et d'un monomère à base d'un cyanovinyle dans le latex polymère caoutchouteux à particules de taille augmentée préparé à l'Étape (S10) ci-dessus et la réalisation d'une polymérisation par greffage pour préparer un latex copolymère greffé incluant un copolymère greffé (S20),
où :
le polymère coagulant inclut un copolymère contenant un groupement acide qui a une masse moléculaire moyenne en poids, telle que mesurée dans la description, dans la plage de 550 000 g/mol à 750 000 g/mol et
la teneur en le monomère à base d'un cyanovinyle introduit à l'Étape (S20) ci-dessus, rapportée à la teneur totale en le monomère à base d'un vinyle aromatique et en le monomère à base d'un cyanovinyle, va de 15 % en poids à 24 % en poids.

2. Méthode de la revendication 1, où le copolymère contenant un groupement acide comprend de 1 % en poids à 10 % en poids d'une unité monomère contenant un groupement acide.

3. Méthode de la revendication 1, où le copolymère contenant un groupement acide a un diamètre particulaire moyen, tel que mesuré dans la description, dans la plage de 85 nm à 140 nm.

4. Méthode de la revendication 1 où, à l'Étape (S10) ci-dessus, le latex polymère coagulant est introduit à une quantité dans la plage de 0,08 partie en poids à 3 parties en poids (sur la base des solides) pour 100 parties en poids (sur la base des solides) du latex polymère caoutchouteux.

5. Méthode de la revendication 1, où le polymère caoutchouteux est un polymère à base d'un diène conjugué.

6. Méthode de la revendication 1, où le latex polymère caoutchouteux à particules de taille augmentée préparé à l'Étape (S10) ci-dessus a un taux de gel dans la plage de 88 % en poids à 96 % en poids.

7. Méthode de la revendication 1, où l'Étape (S20) ci-dessus est effectuée sans introduire un émulsifiant.

8. Méthode de la revendication 1, où les particules du copolymère greffé préparé à l'Étape (S20) ci-dessus ont une distribution de la taille des particules (DTP) dans la plage de 0,45 à 0,6.

9. Copolymère greffé comprenant un polymère caoutchouteux à particules de taille augmentée, où :
le polymère caoutchouteux à particules de taille augmentée inclut un polymère coagulant ;
le copolymère greffé inclut une unité monomère à base d'un vinyle aromatique et une unité monomère à base d'un cyanovinyle ; et
le polymère coagulant inclut un copolymère contenant un groupement acide qui a une masse moléculaire moyenne en poids, telle que mesurée dans la description, dans la plage de 550 000 g/mol à 750 000 g/mol.

10. Composition résinique comprenant le copolymère greffé selon la revendication 9.

11. Composition résinique de la revendication 10, où la composition résinique comprend de 10 % en poids à 40 % en poids du copolymère greffé et de 60 % en poids à 90 % en poids d'un copolymère incluant une unité monomère à base d'un vinyle aromatique et une unité monomère à base d'un cyanovinyle.
